# FASCICULE DE BREVET EUROPEEN

(11) **EP 3 679 688 B1**
(45) Date de publication et mention de la délivrance du brevet: **11.08.2021**
(21) Numéro de dépôt: 18759345.4
(22) Date de dépôt: 03.09.2018
(51) Int. Cl.: H04L 12/28, E06B 9/00, G05B 19/00, G05B 15/02, H04L 29/08

(54) **SYSTÈME DOMOTIQUE POUR UN BÂTIMENT, BÂTIMENT COMPORTANT UN TEL SYSTÈME DOMOTIQUE, ET PROCÉDÉ DE CONFIGURATION**
HEIMAUTOMATIONSSYSTEM FÜR GEBÄUDE, GEBÄUDE MIT EINEM SOLCHEN HEIMAUTOMATIONSSYSTEM, UND KONFIGURATIONSSYSTEM
HOME-AUTOMATION SYSTEM FOR A BUILDING, BUILDING COMPRISING SUCH A HOME-AUTOMATION SYSTEM, AND CONFIGURATION SYSTEM

(30) Priorité: 04.09.2017 FR 1758145
(43) Date de publication de la demande: 15.07.2020
(73) Titulaire: Somfy Activites SA, 74300 Cluses (FR)
(72) Inventeur: FARGIER, Sylvain, 74300 Cluses (FR)
(74) Mandataire: Lavoix
(86) Numéro de dépôt international: PCT/EP2018/073605
(87) Numéro de publication internationale: WO 2019/043221

(56) Documents cités:
- US-A1- 2006 126 617
- US-A1- 2011 213 867
- US-A1- 2016 095 188
- US-B1- 8 548 607
- JIA YUE ET AL: "Context driven content centric networking for smart buildings", PROCEEDINGS OF SPIE, SPIE, 1000 20TH ST. BELLINGHAM WA 98225-6705 USA, vol. 9902, 7 octobre 2016 (2016-10-07), pages 99020D-99020D, XP060077581, ISSN: 0277-786X, DOI: 10.1117/12.2262394 ISBN: 978-1-5106-1533-5

## Description

La présente invention concerne un système domotique pour un bâtiment ainsi qu'un bâtiment comprenant un tel système domotique.

Plus généralement, l'invention se rapporte au domaine des automatismes pour les bâtiments, aussi bien pour les bâtiments à usage commercial que les bâtiments à usage résidentiel, qu'ils soient individuels ou collectifs.

Il existe de nombreux bâtiments pourvus d'équipements électriques commandables visant à assurer des fonctions de confort et de gestion d'énergie, comme le chauffage, la ventilation et la climatisation, mais aussi de gestion de l'éclairage et de pilotage des ouvrants, tels que des stores ou des volets roulants placés devant des fenêtres du bâtiment ou encore de la sécurisation à distance par contrôle de systèmes de fermetures (portes, serrures). Les automatismes sont les ensembles de règles qui régissent la commande des équipements électriques par un système de supervision programmable, afin d'assurer un meilleur confort des occupants du bâtiment ou encore d'optimiser la consommation d'énergie. Ces automatismes sont désignés sous le terme « Gestion Technique du Bâtiment » ou, plus généralement, sous l'expression « Building Automation Systems » en langue anglaise. Dans le résidentiel, les automatismes sont plus souvent désignés par le terme de « domotique ». Pour simplifier, par la suite, le terme domotique sera utilisé pour désigner autant des applications résidentielles que tertiaires.

Typiquement, les équipements d'un même bâtiment sont connectés à une unité de commande, qui a pour fonction de superviser ces équipements et d'en piloter le fonctionnement. Cette connexion est souvent réalisée en raccordant les équipements par des liaisons filaires dédiées. Par exemple, chaque équipement est connecté directement à l'unité de commande au moyen d'un ou plusieurs câbles, suivant une configuration maître/esclave.

Une telle situation n'est cependant pas toujours satisfaisante, car la moindre modification du système domotique ou du fonctionnement des équipements nécessite un recâblage du système, ce qui est coûteux et compliqué à mettre en œuvre dans la mesure où cela requiert de faire appel à un installateur spécialisé.

Dans d'autres systèmes connus, cette connexion est réalisée en raccordant les équipements à un bus de données commun, tel qu'un bus multipoints autorisant une connexion bidirectionnelle, par exemple de type RS485. Ce bus de données est relié à l'unité centrale, de manière à former un réseau qui autorise l'échange de données entre les équipements et l'unité de commande.

Une telle situation présente cependant des inconvénients.

D'une part, l'installation du système est plus compliquée, car les équipements doivent être chacun configurés manuellement afin d'en configurer le fonctionnement et les rendre aptes à communiquer sur le réseau. Il faut donc rajouter, en sus d'une opération de câblage déjà lourde en elle-même, toute une phase de paramétrage réseau qui nécessite là encore l'intervention d'installateurs spécialisés.

De plus, dans une certaine mesure, cette situation offre aussi une flexibilité limitée, car toute modification postérieure à l'installation nécessite de reconfigurer, voire de recâbler le réseau, que ce soit pour ajouter de nouveaux équipements ou pour modifier leur répartition dans le bâtiment.

D'autre part, cette situation connue présente des limites en termes de nombre d'équipements pouvant être accueillis dans le réseau. Par exemple, les solutions de type RS485 couramment utilisées présentent des capacités d'adressage limitées, et ne permettent en pratique de ne connecter qu'au maximum 255 équipements individuels sur un même bus. Cette limite est rédhibitoire lorsqu'il s'agit d'équiper des bâtiments de grande taille et/ou comprenant un grand nombre d'équipements à gérer. Or, les applications contemporaines rendent nécessaire de pouvoir gérer un nombre d'équipements de plus en plus important, par exemple dans le cadre de l'internet des objets ou de la gestion dite intelligente des bâtiments.

En outre, l'architecture de ces réseaux connus peut conduire à l'apparition de temps de latence élevés lors de la communication entre un équipement et l'unité de commande. Cela s'explique notamment par le fait que la commande est centralisée et que les informations émises par les équipements doivent remonter vers le bus pour être traitées de façon centralisée par l'unité de contrôle. Or, pour certaines applications, un temps de latence trop élevé peut générer une insatisfaction chez l'usager souhaitant utiliser l'équipement, voire être préjudiciable au bon fonctionnement de l'équipement.

Il est connu du document US 8 548 607 B1 un contrôleur d'automatisation qui interagit avec un contrôleur de zone adapté pour coordonner les dispositifs périphériques dans une zone comprenant de capteurs de température, d'intensité lumineuse ou de mouvement dans la zone.

Il est connu du document US 2016/095188 A1 un module de passerelle responsable de la gestion des données de surveillance et de diagnostic, surveillant une ou plusieurs zones au sein d'une structure physique pour la consommation d'énergie et l'occupation.

Il est connu du document XP060077581, "Context driven content centric networking for smart buildings", par Jia Zue et al., une passerelle de bâtiment intelligent pour envoyer des messages à des routeurs régionaux, situés dans différentes régions, qui peuvent être différentes pièces ou étages.

Il est connu du document US 2006/126617 A1 des messages circulant parmi les dispositifs de courants porteurs en ligne, installés sur différentes phases du câblage d'un bâtiment. Les messages peuvent être envoyés à tous les destinataires à portée, en tant que messages de diffusion, ou ils peuvent être envoyés à tous les membres d'un groupe d'appareils, en tant que messages de diffusion de groupe.

C'est à ces inconvénients qu'entend plus particulièrement remédier l'invention en proposant un système domotique comprenant un réseau de communication amélioré qui permette de gérer plus simplement un grand nombre d'équipements domotiques au sein d'un bâtiment tout en permettant une meilleure évolutivité et flexibilité d'utilisation que dans les solutions connues.

A cet effet, l'invention concerne un système domotique pour un bâtiment tel que défini par la revendication 1.

Grâce à l'invention, le réseau de communication permet de gérer un grand nombre d'équipements domotiques au sein du bâtiment, tout en présentant une flexibilité d'installation et d'évolution accrues. L'architecture de réseau de communication hiérarchique permet de gérer un grand nombre d'équipements, chaque équipement étant un élément communicant du système domotique, tout en présentant une flexibilité d'installation et d'évolution accrue.

Dans une telle architecture hiérarchique, le système comporte un réseau principal de niveau de hiérarchie supérieur, et une multiplicité de sous-réseaux de niveaux de hiérarchie inférieurs, connectés par des équipements réseau, passerelles ou routeurs, au sous-réseau de rang supérieur au leur.

Selon l'invention, chacun parmi plusieurs des équipements domotiques du réseau de communication est configurée pour fournir des informations aux autres équipements domotiques avec une portée de diffusion réglable par sélection entre:
(a) à destination du seul sous-réseau de rang hiérarchique inférieur n-1 dans lequel il se trouve,
(b) à destination de plusieurs des sous-réseaux de rang hiérarchique inférieur n-1, et
(c) à destination de l'ensemble du réseau de rang n et des sous-réseaux de rang n-1.

De plus, les caractéristiques suivantes peuvent être présentes, isolément ou suivant toute combinaison admissible:
- L'équipement réseau est configuré pour inhiber la propagation des informations vers les équipements domotiques de sous-réseaux de même rang hiérarchique si la portée de diffusion réglable est une portée locale.
- L'équipement réseau autorise la propagation des informations vers les équipements domotiques de sous-réseaux de rang hiérarchique inférieurs si la portée réglable est une portée locale.
- Le protocole de communication est le protocole IP, de préférence le protocole IPv6.
- Le réseau de rang hiérarchique n est un réseau principal comprenant un bus de données commun, et en ce que parmi les sous-réseaux, au moins un premier de ces sous-réseaux est connecté à au réseau principal par l'intermédiaire d'un équipement réseau ayant la forme d'une passerelle de connexion entre le bus de données commun et le premier sous-réseau câblé, les média physiques du réseau principal et du premier sous-réseau étant différents.
- Le bus de données commun est une liaison Ethernet.
- Le réseau de rang hiérarchique n et les sous-réseaux de rang hiérarchique inférieur n-1 comprennent des médias physiques identiques, chacun des sous-réseaux étant connecté au réseau de rang hiérarchique n par l'intermédiaire d'un équipement réseau tel qu'un routeur.
- Les équipements domotiques d'un même sous-réseau sont connectés entre eux au moyen d'une liaison physique telle qu'un bus de données multipoints, de préférence une liaison filaire de type RS485.
- Les équipements réseau et les équipements domotiques sont chacun équipés d'une interface réseau qui les connecte au réseau de communication, cette interface réseau étant programmée pour implémenter une pile réseau conforme au protocole de communication prédéfini.
- Un équipement domotique est un appareil domotique commandable pourvu d'un actionneur commandable, ou un point de commande, ou un capteur.

Selon un autre aspect, l'invention concerne un bâtiment, par exemple à usage domestique, commercial ou industriel, comprenant plusieurs zones et équipé d'un système domotique comprenant des équipements domotiques répartis au sein de zones du bâtiment, le système domotique étant tel que décrit précédemment.

Selon un autre aspect, l'invention concerne un procédé de configuration d'un système domotique tel que décrit précédemment, comprenant les étapes suivantes :
- Installation d'un point de commande ayant une portée de diffusion prédéfinie de sous-réseau dans un premier sous-réseau (SSN1, SSN2) d'un réseau de communication du système domotique ;
- Emission, vers le réseau de communication, d'une première commande en mode multicast à partir de ce point de commande ;
- Vérification que la première commande s'applique aux seuls équipements domotiques du premier sous-réseau, la configuration du système domotique étant considérée comme erronée dans le cas contraire ;
- Installation du point de commande dans un deuxième sous-réseau de rang n, ayant un rang supérieur au rang du premier sous-réseau ;
- Emission, vers le réseau de communication, d'une deuxième commande en mode multicast à partir du point de commande ;
- Vérification que la deuxième commande s'applique aux éléments du deuxième sous-réseau de rang n ainsi qu'aux éléments des sous-réseaux de rang inférieur au rang n, la configuration du système domotique étant considérée comme erronée dans le cas contraire.

L'invention sera mieux comprise et d'autres avantages de celle-ci apparaîtront plus clairement à la lumière de la description qui va suivre, d'un mode de réalisation d'un système domotique pour un bâtiment, donnée uniquement à titre d'exemple et faite en référence aux dessins annexés dans lesquels :
- la figure 1 est une représentation schématique d'un bâtiment comprenant un système domotique conforme à l'invention ;
- la figure 2 est une représentation schématique d'un réseau de communication du système domotique de la figure 1 pour connecter des équipements du système domotique ;
- la figure 3 est une représentation schématique d'une interface réseau utilisée dans des équipements du système domotique appartenant au réseau de communication de la figure 2 ;
- la figure 4 est une représentation schématique d'un exemple de structure d'adresse réseau pour identifier les équipements du réseau de communication de la figure 2 ;
- la figure 5 est une représentation schématique d'un équipement réseau utilisé dans le réseau de communication de la figure 2.

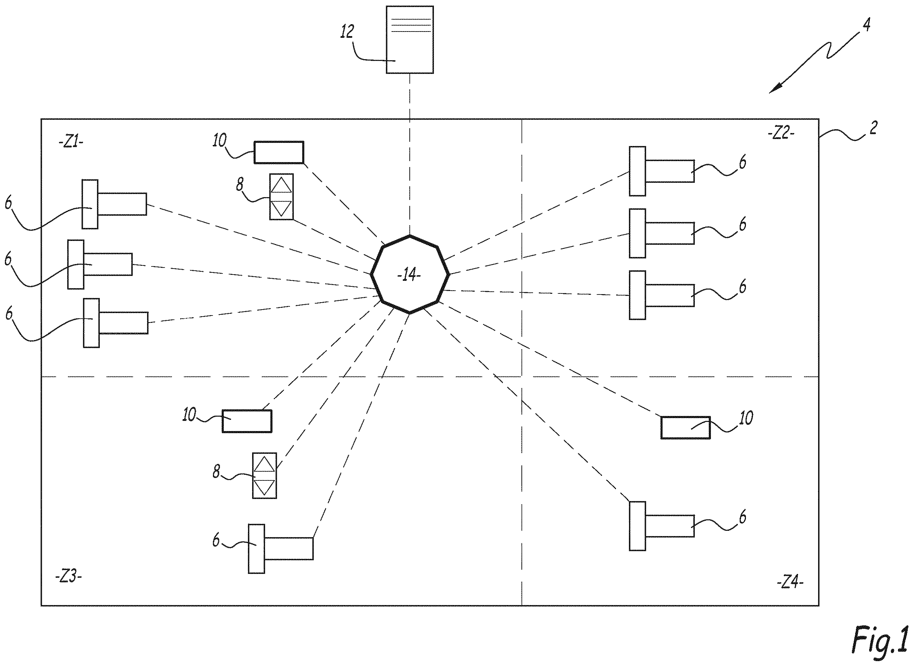

La figure 1 représente un bâtiment 2, comprenant plusieurs zones Z1, Z2, Z3, Z4. Le bâtiment 2 est équipé d'un système domotique 4 qui comporte un ensemble d'équipements domotiques répartis dans les zones du bâtiment 2, ainsi qu'un système de commande de ces équipements domotiques.

Le système domotique 4 est ici destiné à procurer des fonctions de confort et de gestion d'énergie du bâtiment 2, comme le chauffage, la ventilation et la climatisation, ainsi que des fonctions de gestion de l'éclairage et de pilotage des ouvrants, tels que des stores ou des volets roulants placés devant des fenêtres du bâtiment 2 et/ou des fonctions de sécurité comme la surveillance de locaux et l'alarme.

L'ensemble d'équipements domotiques comprend des équipements domotiques tels que des appareils domotiques commandables 6, des points de commande 8 et des capteurs 10, aptes à mettre en œuvre les fonctions ci-dessus.

Le système de commande comporte notamment une unité de commande 12 programmable et un réseau de communication 14, interne au bâtiment 2, le réseau de communication 14 étant agencé pour permettre la communication les équipements domotiques du système domotique 4 entre eux et avec l'unité de commande 12. Les équipements domotiques du système domotique 4 qui sont connectés à ce réseau de communication 14 sont, dans ce qui suit, dits appartenir au réseau de communication 14.

Les équipements domotiques et le système de commande sont ici raccordés à une ou plusieurs sources d'alimentation électrique, non illustrée, du bâtiment 2.

Les zones du bâtiment 2 correspondent à des portions du bâtiment 2 qui sont situées à l'intérieur et/ou l'extérieur de ce bâtiment et qui sont destinées à recevoir chacune une partie des équipements domotiques du système domotique 4.

Le bâtiment 2 peut être un ensemble de bureaux, ou un bâtiment à usage d'habitation, ou un bâtiment à usage commercial ou industriel, ou toute combinaison de ces usages. Il peut notamment s'agir d'un immeuble ou d'une maison individuelle.

Ainsi, au sens de la présente description, le terme « domotique » n'est pas limité à un usage purement domestique et résidentiel.

Par exemple, des zones du bâtiment 2 correspondent à des niveaux du bâtiment 2, tels que des étages ou des sous-sols. Ces zones peuvent aussi être des pièces, des groupes de pièces du bâtiment 2, éventuellement séparées les unes des autres par des cloisons, ces pièces pouvant être réparties au sein d'un ou plusieurs niveaux du bâtiment 2.

Ces zones peuvent être délimitées de façon indépendante de la structure physique du bâtiment 2. Par exemple, une même pièce du bâtiment 2 peut comporter plusieurs zones. De telles zones peuvent également être situées à l'extérieur du bâtiment 2, par exemple lorsqu'elles correspondent à une façade ou une portion de façade du bâtiment 2. Ces zones peuvent également correspondre à des façades ou des parties de façade comme une partie de façade correspondant à un même étage.

Ces zones sont par exemple définies lors de la conception du bâtiment 2 et/ou lors de la conception et/ou l'installation du système domotique 4.

De préférence, les zones du bâtiment 2 sont distinctes les unes des autres. Toutefois, en variante, des zones du bâtiment 2 peuvent se recouper et/ou être imbriquées entre elles.

Dans cet exemple, seules quatre zones, ici notées Z1, Z2, Z3 et Z4, sont définies en référence au bâtiment 2. Toutefois, en pratique, ce nombre peut être différent. Il est notamment adapté en fonction de la configuration du bâtiment 2 et des fonctions du système domotique 4.

Pour simplifier la figure 1, les zones Z1, Z2, Z3 et Z4 sont illustrées de façon schématique à l'intérieur d'un même étage du bâtiment 2.

De préférence, chaque appareil domotique 6 commandable comporte un actionneur pilotable au moyen d'au moins un signal de commande.

Les appareils domotiques 6 sont ici illustrés de façon identique. Toutefois, ils peuvent présenter des différences entre eux et assurer des fonctions différentes au sein du système domotique 4.

Par exemple, l'actionneur de l'appareil 6 comprend un moteur électrique, l'actionneur agissant sur une charge mécanique et agencé pour déplacer et/ou régler un élément du bâtiment 2.

Selon un exemple, la charge mécanique de l'appareil 6 est un volet occultant, tel qu'un panneau, un store ou un rideau opaque, associé à au moins une ouverture du bâtiment 2, telle qu'une fenêtre ou une baie vitrée. Le déplacement de ce volet occultant permet de réguler la quantité d'ensoleillement reçue par le bâtiment 2 au travers de cette ouverture.

Selon un autre exemple, la charge mécanique de l'appareil 6 est un compresseur adapté pour mettre en œuvre un cycle de détente-compression d'un fluide caloporteur au sein d'un système de réfrigération du bâtiment 2, tel qu'un climatiseur ou une pompe à chaleur, en vue de réguler la température à l'intérieur du bâtiment 2.

Selon encore un autre exemple, la charge mécanique de l'appareil 6 est une pompe ou un ventilateur destiné à mettre en mouvement un volume de fluide au sein du bâtiment 2, par exemple pour aspirer ou souffler de l'air au sein d'un système de ventilation, ou pour faire circuler de l'eau ou un fluide caloporteur au sein d'une conduite dédiée.

En variante, l'actionneur de l'appareil 6 peut piloter un dispositif de commutation électrique, afin de commander l'allumage et l'extinction d'une source lumineuse, telle qu'une lampe au néon ou à diodes électroluminescentes, au sein du bâtiment 2.

L'appareil domotique commandable 6 peut également être un éclairage, par exemple, un éclairage intérieur, extérieur ou un système de commande d'éclairage, un système d'alarme, ou encore une caméra vidéo, en particulier une caméra de vidéosurveillance.

Un point de commande 8 est destiné à recevoir des instructions de pilotage de la part d'un utilisateur du bâtiment 2, en vue de piloter, directement ou indirectement, un ou plusieurs des appareils domotiques commandables 6 et/ou de piloter l'unité de commande 12.

A cet effet, chaque point de commande 8 comporte ici une interface homme-machine, non illustrée, comprenant des moyens d'entrée de données, tels qu'un ou plusieurs interrupteurs et/ou un ou plusieurs boutons poussoirs et/ou un ou plusieurs boutons rotatifs et/ou un écran tactile. Le point de commande 8 peut aussi comporter une interface de connexion pour y raccorder des moyens de commande externes, par exemple un ou plusieurs interrupteurs individuels disposés autour du point de commande 8 et étant raccordés par une liaison filaire à ce dernier.

L'interface homme-machine du point de commande 8 peut également comporter des moyens d'affichage, tels que des témoins lumineux et/ou un écran électronique, par exemple à cristaux liquides, pour afficher, à destination de l'utilisateur, des informations relatives au fonctionnement du système domotique 4 ou à des instructions saisies sur ladite interface homme-machine.

Les points de commande 8 peuvent se présenter sous la forme d'une télécommande portative associée à un récepteur fixe ou, en variante, d'un terminal de commande fixe solidarisé à un mur du bâtiment 2.

Là encore, les points de commande 8 sont ici illustrés de façon identique, mais ils peuvent présenter des différences entre eux et assurer des fonctions différentes au sein du système domotique 4.

Chaque capteur 10 est destiné à convertir une ou plusieurs grandeurs physiques relatives à l'état du bâtiment 2 ou de son environnement en un ou plusieurs signaux proportionnels à cette grandeur physique. Ce signal est, par exemple, un signal électrique, un signal lumineux ou un signal radiofréquence. Ce signal peut être transmis par le capteur à destination d'au moins un équipement domotique et/ou du système de commande, par exemple, l'unité de commande 12.

Un ou plusieurs capteurs 10, peuvent être intégrés à un appareil domotique commandable 6, à un point de commande 8 ou encore à l'unité de commande 14. L'installation domotique 4 peut également comprendre un ou plusieurs capteurs indépendants à ces éléments.

Par exemple, les grandeurs physiques mesurées par les capteurs 10 sont, de façon non limitative, une température, par exemple une température d'un mur ou de l'air ambiant, un taux d'humidité, une valeur de luminosité, ou une pression de l'air ambiant, une valeur de consommation par exemple d'eau, de gaz ou d'électricité, l'état d'ouverture d'un volet roulant, la position d'un ouvrant tel une fenêtre, motorisée ou non ou encore la présence ou l'absence d'un utilisateur.

Là encore, les capteurs 10 sont ici illustrés de façon identique mais peuvent présenter des différences entre eux au sein du système domotique 4.

De manière générale, chaque équipement domotique comprend une interface réseau 40, qui lui permet de communiquer sur le réseau 14 et qui sera définie plus loin dans la description.

A titre d'exemple illustratif, sur la figure 1, la zone Z1 comporte trois appareils domotiques 6, un point de commande 8 et un capteur 10. La zone Z2 comporte trois appareils domotiques 6. La zone Z3 comporte un appareil domotique 6, un point de commande 8 et un capteur 10. La zone Z4 comporte un appareil domotique 6 et un capteur 10.

Par exemple, les trois appareils domotiques commandables 6 de la zone Z2 sont adaptés pour déplacer des volets occultants équipant des ouvertures du bâtiment 2 ménagées au niveau de cette zone Z2. Toujours dans cet exemple, les appareils domotiques 6 de la zone Z1 font ici partie d'un système de climatisation et de réfrigération de l'air circulant dans la zone Z1. Leur fonctionnement est régulé en fonction d'ordres de pilotage reçus par le point de commande 8 et en fonction d'une température mesurée par le capteur 10 situés dans cette zone Z1.

Chaque équipement domotique du système domotique 4, dont notamment les appareils domotiques commandables 6, les points de commande 8 et les capteurs 10, est connecté à l'unité de commande 12 par l'intermédiaire du réseau de communications 14 et comporte à cet effet une interface réseau 40 pour se connecter à ce réseau de communications 14. L'unité de commande 12 comporte également une interface réseau 40.

Par exemple, chaque appareil domotique 6 reçoit des signaux de commande par l'intermédiaire du réseau de communications 14. Chaque point de commande 8 transmet les instructions de pilotage reçues par l'intermédiaire du réseau de communications 14. Chaque capteur 10 envoie les informations mesurées par l'intermédiaire du réseau de communication 14.

La communication s'effectue selon un protocole de communication donné.

Cette communication s'effectue ici par un échange de messages, par exemple sous forme de paquets, ces messages contenant chacun un en-tête, qui inclut une destination du message, et des données utiles, comme ordre de commande ou une valeur de grandeur physique mesurée par un capteur. De préférence, le protocole de communication utilisé est un protocole IP (« Internet Protocol »), par exemple le protocole IPv6. En variante, le protocole de communication est le protocole IPv4.

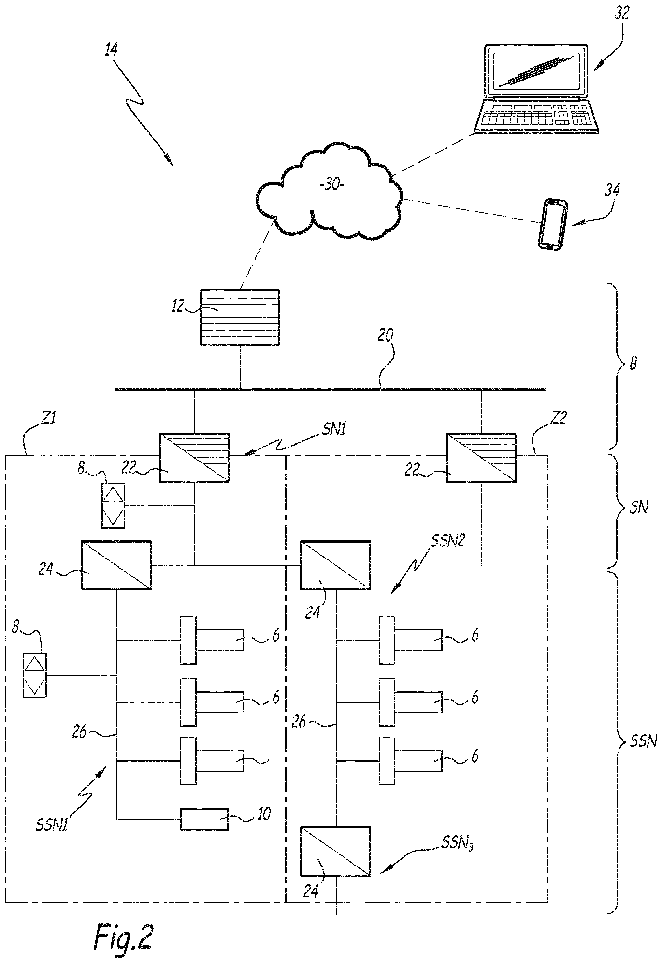

La figure 2 représente plus en détail un exemple du réseau de communications 14. Pour faciliter la lecture de cette figure 2, les équipements domotiques associés aux zones Z3 et Z4 du bâtiment 2 n'y sont pas illustrés.

Le réseau de communications 14 est un réseau hiérarchique à plusieurs niveaux de hiérarchie, également appelé rang. Il comporte un réseau principal B, qui comporte notamment un bus de données commun 20, formant une liaison physique dorsale 20, aussi dite « backbone » en langue anglaise, auquel l'unité de commande 12 est connectée. Par exemple, la liaison 20 est une liaison câblée de type Ethernet, par exemple Ethernet 100Mbit/s ou supérieur.

Ce réseau principal B est ici identifié par un identifiant, noté GRP, qui est ici incorporé dans l'adresse réseau de chaque élément communicant appartenant à ce réseau principal B.

Le réseau 14 comporte également au moins un sous-réseau, noté de façon générique par la référence SN. Ce sous-réseau comporte un équipement réseau 22, 24, qui est connecté à la liaison dorsale 20 et qui forme une tête de ce sous-réseau SN. Il peut s'agir d'un équipement réseau d'interconnexion, également appelé passerelle 22, destiné à interconnecter deux parties de réseaux distinctes, par exemple, de technologies différentes. Il peut également s'agir d'un routeur 24 lorsque le réseau principal B et le sous-réseau SN sont de même nature. Les passerelles et les routeurs ont des fonctionnements semblables à différence que le routeur ne convertit pas les formats de transmissions de données. Ces deux équipements réseau sont des éléments intermédiaires du réseau de communication 14 assurant le routage des paquets. Leur rôle est de faire transiter des paquets d'une interface réseau 40 vers une autre selon un ensemble de règles formant une table de routage. Dans l'exemple de la figure 2, deux passerelles 22 sont connectés à la liaison dorsale 20, formant ainsi deux sous-réseaux distincts. Seul l'un de ces deux sous-réseaux, portant la référence SN1, est décrit dans ce qui suit.

En variante, le nombre de sous-réseaux SN peut être différent.

Les sous-réseaux SN sont directement connectés au réseau principal par l'intermédiaire de passerelles, et ont un premier rang associé dans le réseau hiérarchique.

Chaque sous-réseau SN contient au moins un équipement domotique 6, 8, 10 du système domotique 4, connecté à la passerelle 22 correspondante par l'intermédiaire d'une liaison physique 26, de préférence câblée.

Le réseau de communication 14 comporte en outre des sous-sous-réseaux de rang inférieur à celui des sous-réseaux SN, et sont notés de façon générique par la référence SSN.

Chaque sous-réseau SN est ici identifié par un identifiant SID, qui est ici incorporé dans l'adresse réseau de chaque élément appartenant à ce sous-réseau SN.

Chaque sous-réseau SN contient au moins un équipement domotique du système domotique 4, connecté à l'équipement réseau 22 correspondant par l'intermédiaire d'une liaison physique, de préférence câblée.

Chaque sous-réseau SN de rang n contient avantageusement un ou plusieurs sous-réseaux de rang inférieur, dit de rang « n-1 », au sein desquels sont répartis des équipements domotiques du sous-réseau SN. Chaque sous-réseau de rang inférieur, qui est nommé sous-sous-réseau et noté de façon générique par la référence SSN, comporte avantageusement un routeur 24 formant ici une tête de ce sous-réseau SSN de rang inférieur. Le routeur 24 est ici connecté à l'équipement réseau 22 par l'intermédiaire d'une liaison physique, de préférence câblée.

Au sens de la présente description, un routeur est un outil matériel et logiciel formant un élément intermédiaire dans un réseau et dirigeant des données entre une et plusieurs parties du réseau. La direction donnée aux données, ou routage, est réalisée selon un ensemble de règles formant une table de routage. Une passerelle est un routeur particulier, qui assure en plus des fonctions de routage, également une fonction de traduction des messages circulant sur le réseau, dans la mesure où les moyens physiques et/ou les protocoles diffèrent entre deux parties de réseau.

Chaque sous-réseau de rang inférieur SSN comporte ainsi un ou plusieurs équipements domotiques, connectés au routeur 24 correspondant par l'intermédiaire d'une liaison physique 26 et grâce à leurs interfaces réseau 40 respectives. Les équipements rattachés à un même routeur 24 sont ici dits faire partie d'un même sous-réseau local.

Chaque sous-réseau SSN est ici identifié par un identifiant SSID, qui est ici incorporé dans l'adresse réseau de chaque élément communicant appartenant à ce sous-réseau SSN.

De façon optionnelle, chaque sous-réseau SSN peut comporter un ou plusieurs sous-réseaux de rang encore inférieur, notés ici de façon générique par la référence SSSN.

Chacun de ces sous-réseaux SSSN présente ici une structure analogue à celle des sous-réseaux SN ou SSN de sorte que la description ci-dessus peut leur être appliquée. Par exemple, chaque sous-réseau SSSN comporte un routeur 24 qui est connecté à un sous-réseau SSN de rang supérieur et comporte des équipements domotiques qui sont connectés à ce routeur 24 par l'intermédiaire d'une liaison physique similaire à la liaison 26.

Le réseau 14 peut aussi comporter d'autres sous-réseaux SSSN de rang encore inférieur.

Ainsi, le réseau de communications 14 est un réseau hiérarchisé, c'est-à-dire qu'il présente une structure hiérarchisée, avec des sous-réseaux de rang différent pouvant être imbriqués entre eux.

Par exemple, le réseau 14 peut comporter jusqu'à neuf ou dix couches, ou rangs, de sous-réseaux différents connectés au réseau principal B.

Les équipements domotiques du système domotique 4 qui sont connectés à ce réseau de communication 14 sont, dans ce qui suit, dits appartenir au réseau de communication 14. Chacun des équipements domotiques du système 4 connecté au niveau d'un sous-réseau SN, SSN ou SSSN appartient à ce sous-réseau SN, SSN ou SSSN.

Les sous-réseaux SN, SSN et SSSN peuvent être associés chacun à une zone du bâtiment 2.

Un sous-réseau SN, SSN ou SSSN est dit être « associé » à une zone Z1, Z2, Z3, Z4 du bâtiment 2 lorsque les équipements domotiques 6, 8, 10 appartenant à ce sous-réseau sont eux-mêmes associés à cette zone, par exemple parce qu'ils sont physiquement localisés à l'intérieur de cette zone Z1, Z2, Z3, Z4 du bâtiment 2.

Dans l'exemple illustré, chaque sous-réseau SSN est associé à une telle zone Z1, Z2, Z3, Z4 du bâtiment 2.

Plus précisément, dans l'exemple de la figure 2, le sous réseau SN1 contient un point de commande 8, ainsi que deux sous-réseaux de rang inférieur, notés SSN1 et SSN2 et aussi nommés premier et deuxième sous-réseaux, comportant respectivement un premier routeur 24 et un deuxième routeur 24. Le premier et le deuxième routeur organisent le réseau en sous-réseaux, le routeur formant la tête du sous-réseau et formant ainsi une topologie de réseau. Une topologie de réseau correspond ainsi à l'architecture (physique ou logique) de celui-ci, définissant les liaisons entre les équipements du réseau et une hiérarchie éventuelle entre eux.

Le premier sous-réseau SSN1 contient un point de commande 8 ainsi que deux appareils domotiques 6 et un capteur 10, connectés au premier routeur 24 par une liaison physique 26, telle qu'un bus de données multipoints. Ce premier sous-réseau SSN1 est associé à la zone Z1 précédemment décrite. Le point de commande 8, les appareils 6 et le capteur 10 sont donc ceux précédemment décrits comme appartenant à la zone Z1.

De façon analogue, le deuxième sous-réseau SSN2 contient ici trois appareils domotiques 6, connectés au deuxième routeur 24 par une liaison physique 26. Ce deuxième sous-sous-réseau SSN2 est associé à la zone Z2 précédemment décrite. Ces appareils 6 sont donc ceux précédemment décrits comme appartenant à la zone Z2.

En variante, les réseaux SN, SSN et SSSN peuvent être en nombre différent et/ou comporter d'autres éléments domotiques que ceux illustrés ici.

Le nombre et la structure des sous-réseaux SN, SSN, SSSN, ainsi que leur association aux zones du bâtiment 2, sont de préférence choisis en fonction de la configuration du bâtiment 2 et des fonctionnalités remplies par le système domotique 4.

A titre d'exemple illustratif et non limitatif, un sous-réseau SN est associé à un étage du bâtiment 2, les sous-réseaux SSN de rang inférieur n-1 rattachés à ce sous-réseau SN sont associés chacun à une pièce de cet étage du bâtiment 2, et les sous-réseaux SSSN rattachés à chacun de ces sous-réseaux SSN sont associés chacun à une portion d'une des pièces, ou bien être associés à la même pièce mais en réunissant des appareils 6 d'un même type : un sous-réseau SSSN pour les appareils 6 régissant l'éclairage dans cette pièce, un pour les appareils 6 commandant des volets occultants associés aux fenêtres de cette pièce, un pour les appareils 6 assurant le fonctionnement de la climatisation dans cette pièce.

Dans cet exemple, la liaison physique qui connecte chaque équipement réseau 22 aux équipements domotiques et aux routeurs 24 est un bus de données série multipoints de type RS485, aussi connu sous le nom EIA-485. De même, les liaisons physiques 26 sont ici des bus de données multipoints de type RS485.

Comme le nombre d'équipements domotiques connectés au sein d'un sous-réseau SSN est réduit par rapport au nombre total d'équipements domotiques dans tout le système 4, le choix d'une liaison de type RS485 n'est pas ici rédhibitoire, au contraire du cas où tous les équipements domotiques du système 4 seraient connectés à un tel bus de données RS485.

L'utilisation d'une liaison physique 26 de type RS485 présente des avantages dans ce réseau de communication 14, car elle rend possible l'utilisation de bus de données de grande longueur, par exemple jusqu'à 1km de long, sans trop dégrader la qualité du signal qui y circule. La limitation du nombre d'équipements domotiques 6, 8, 10 et/ou d'équipements réseaux 22, 24 connectés sur une même liaison physique 26 n'est pas pénalisante, grâce à l'architecture hiérarchique qui permet de connecter un nombre important de sous-réseaux les uns aux autres.

De façon optionnelle, l'unité de commande 12 est adaptée pour être connectée à un réseau de données extérieur 30, tel que le réseau internet, indépendamment du réseau de communications 14. Sur la figure 2, les passerelles 22 sont des équipements réseau d'interconnexion entre un bus de données Ethernet et un bus RS485.

De cette manière, l'unité de commande 12 peut communiquer avec un serveur informatique distant connecté à ce réseau extérieur 30, par exemple pour envoyer des rapports sur l'état de fonctionnement du système 4 à des fins de diagnostic, ou encore pour recevoir des instructions de pilotage. L'unité de commande 12 peut également communiquer par ce réseau extérieur 30 avec un ou plusieurs utilisateurs distants pourvus d'ordinateurs 32 ou de terminaux mobiles de communications 34 tels que des appareils de téléphonie mobile intelligent ou « *smartphones* » en langue anglaise, ou des tablettes tactiles ou tout autre équipement équivalent.

Le réseau de communication 14 est adapté pour fonctionner suivant un protocole de communication prédéfini, tel que le protocole IP, afin d'assurer une communication entre les éléments communicants du système 4 qui sont connectés à ce réseau 14, ces éléments incluant notamment les équipements domotiques précédemment définis, et des équipements réseau tels que les passerelles 22 et les routeurs 24. Le réseau 14 est de préférence compatible avec le protocole IPv6.

Ce protocole de communication est ici implémenté à l'aide des interfaces réseau qui équipent les divers éléments du système 4 qui sont connectés par le réseau 14, notamment grâce aux interfaces réseau 40 dont sont pourvus les équipements domotiques et grâce aux interfaces réseau correspondantes des équipements réseau, tels que des passerelles 22 et des routeurs 24. Par exemple, ces interfaces réseau implémentent chacune une pile de protocole, c'est-à-dire un ensemble de couches de protocole, chaque couche de protocole s'appuyant sur celles qui sont en dessous afin d'y apporter un supplément de fonctionnalité.

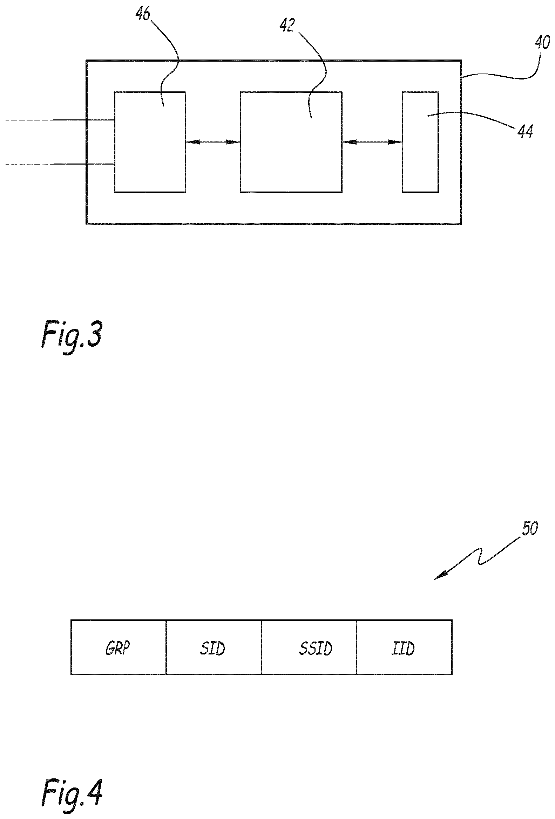

La figure 3 représente de façon schématique l'interface réseau d'un élément communicant. L'interface réseau d'un élément communicant a pour fonction de connecter cet élément communicant à un ou plusieurs réseaux de communication. Elle lui permet ainsi de communiquer avec les autres éléments communicants du ou des réseaux auquel il est connecté.

Comme illustré à la figure 3, chaque interface réseau 40 comporte un contrôleur réseau 42, une mémoire informatique 44 et un module d'entrée-sorties 46, aussi nommé « transceiver» en langue anglaise, ce module 46 étant ici pourvu d'un connecteur qui le raccorde physiquement à une couche physique du réseau 14.

Dans cet exemple, la couche physique du réseau 14 est en partie formée par les liaisons 26.

De façon connue, le contrôleur 42 comporte un calculateur électronique programmé pour assurer le traitement des données transitant par le réseau 14 et par le connecteur 46.

Par exemple, le contrôleur 42 est programmé pour traiter automatiquement les données reçues sur le connecteur 46 et lui étant destinées, notamment pour extraire et décoder le contenu de paquets reçus et pour transmettre ce contenu à l'équipement domotique auquel il est associé. De façon complémentaire, le contrôleur 42 est programmé pour préparer automatiquement les données émises par l'équipement domotique auquel il est associé, en vue de leur envoi vers un ou plusieurs équipements domotiques connectés au réseau 14.

La mémoire 44 contient ici une adresse réseau 50, une partie d'adresse réseau ou au moins un identifiant, non illustré, permettant d'identifier de façon unique l'interface 40 sur le réseau 14 et qui donc identifie l'équipement domotique correspondant sur le réseau 4. L'interface réseau 40 est ici compatible avec le standard IPv6. Par simplification, il est mentionné dans la description que l'adresse réseau identifie l'équipement domotique, ou l'équipement réseau correspondant.

En outre, la mémoire 44 contient avantageusement des instructions de code de programme exécutables pour assurer le fonctionnement précédemment décrit du contrôleur 42.

Les bus de données de type RS485, utilisés ici pour former, notamment, la liaison physique 26, comportent chacun une paire de fils conducteurs, de préférence torsadés. Pour transmettre des données sur ce bus, un signal porteur est émis, par exemple sous la forme d'une tension électrique entre cette paire de fils conducteurs, cette tension pouvant prendre des valeurs prédéfinies de façon à encoder une information, par exemple de façon binaire. La forme du signal porteur est par exemple définie par la norme TIA/EIA-485-A.

Dans cet exemple, la liaison 26 est une liaison bidirectionnelle de type « half-duplex ». En variante, toutefois, il peut s'agir d'une liaison de type « full duplex ». Dans ce cas, le module 46 est modifié en conséquence.

La vitesse de transfert de données autorisée par la liaison 26, ou débit binaire, est ici inférieure ou égale à 200 kbps.

La figure 4 représente un exemple d'adresse réseau 50 associée à un équipement connecté au réseau 14. Cette adresse réseau 50 comporte ici quatre composantes :
- l'identifiant IID qui est associé de façon unique avec l'équipement domotique associé à cette interface réseau 40 ;
- l'identifiant ou préfixe GRP qui identifie le réseau de communication dans son ensemble, auquel appartient ledit équipement ;
- l'identifiant SID du sous-réseau SN auquel appartient ledit équipement ;
- le cas échéant, l'identifiant SSID du sous-réseau SSN ou SSSN de niveau inférieur auquel appartient ledit équipement.

Cette adresse réseau 50 se présente par exemple sous la forme d'une variable numérique, au sein de laquelle sont concaténées les valeurs des identifiants IID, GRP, SID et SSID, suivant une structure prédéfinie. Par exemple, l'adresse réseau 50 est une adresse IP, de préférence de type IPv6.

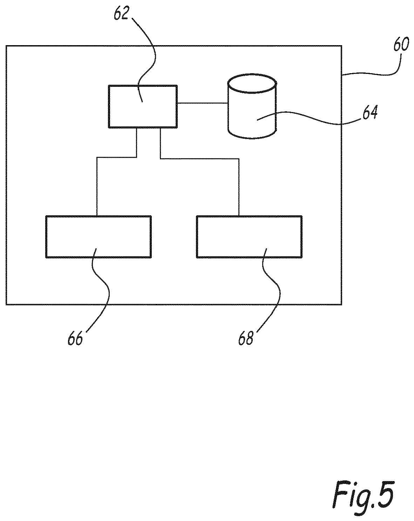

La figure 5 représente schématiquement un équipement réseau 60 générique destiné à être utilisé dans le réseau 14. L'équipement 60 correspond par exemple au routeur 24.

Cet équipement 60 comporte un calculateur électronique 62, une mémoire informatique 64, une première interface réseau 66 et une deuxième interface réseau 68. L'interface 66 est par exemple destinée à être connectée à un premier sous-réseau, alors que l'interface 68 est destinée à être connectée à un deuxième sous-réseau, de rang inférieur au premier sous-réseau. Les interfaces réseau 66 et 68 sont, par exemple, chacune physiquement similaires à l'interface 40. Le dispositif 60 comporte au moins une adresse réseau 50 qui identifie chaque interface au moins au sein du sous-réseau auquel elle est destinée à être connectée. Le calculateur électronique 62 est notamment programmé pour assurer un routage des paquets de données arrivant depuis la partie de réseau associé à l'une ou l'autre des interfaces 66 ou 68 vers une partie de réseau accessible au travers de l'autre interface 66 ou 68, en fonction notamment de la destination de ces paquets de données. La transmission des informations au travers du routeur dépend notamment de la topologie (ou géométrie) du réseau, de la configuration des équipements communicants et des relations d'appairages entre équipements. Par exemple, l'équipement 60 peut comporter une table de routage, par exemple générée à partir des adresses de réseau associées à ses interfaces et/ou enregistrée au sein de la mémoire 64.

Par exemple, pour le routeur 24, les interfaces 66 et 68 sont ici compatibles avec les bus de données de type RS485.

La passerelle 22 présente un fonctionnement semblable à celui de l'équipement 60 décrit ci-dessus. Ici, l'interface réseau 66 est connectée avec la liaison dorsale 20 et la passerelle assure également une fonction de traduction des messages circulant sur le réseau, dans la mesure où les moyens physiques et/ou les protocoles diffèrent entre la liaison dorsale et les branches des sous-réseaux.

Le protocole de communication utilisé par le réseau 14 permet d'assurer l'adressage des messages échangés entre les éléments communicants du système 4, y compris lorsque aucun appairage n'a été encore défini. Ceci permet de tester le fonctionnement du réseau 14 au fur et à mesure de sa création.

Par exemple dans un réseau hiérarchique configuré, les différents appairages entre équipements devant communiquer entre eux ayant été réalisés, lorsqu'un élément du système 4, tel qu'un point de commande, doit envoyer des données à destination d'un autre élément communicant du système 4 auquel il est appairé, tel qu'un premier appareil domotique 6, alors le point de commande génère un message contenant les données à envoyer et contenant l'adresse réseau 50 du premier appareil domotique en tant qu'élément de destination. Le message est ainsi transmis au sein du réseau 14 jusqu'à atteindre sa destination. Plus précisément, le message destiné à un équipement local appartenant au même sous-réseau transite par l'intermédiaire du bus 26. Le message destiné à un équipement situé à l'extérieur du sous-réseau est routé au moyen du routeur 24 associé à ce sous-réseau, qui le redirige vers le sous-réseau correspondant, éventuellement par l'intermédiaire d'un ou plusieurs routeurs, d'une ou plusieurs passerelles 22 et de la liaison dorsale 20.

En particulier, le réseau 14 est notamment configuré pour autoriser une communication de type « multicast », aussi nommée diffusion de groupe, entre les éléments communicants du réseau 14 et notamment entre les équipements domotiques du système 4.

Plus précisément, en mode multicast, un élément communicant du réseau envoie un message simultanément à destination d'un groupe auquel peuvent être abonnés un ou plusieurs éléments communicants du réseau. Un message multicast émis sur le réseau 14 a également un champ comprenant une configuration de portée de diffusion, préférentiellement assignée par défaut. Cette portée permet aux éléments communicants d'être opérationnels y compris en l'absence d'appairages établis.

Cette configuration de portée peut prendre plusieurs valeurs spécifiques :
- Portée locale, celle du sous-réseau,
- Portée des sous-réseaux de même rang ou inférieurs
- Portée site, l'ensemble du réseau 14.

Cette portée est par exemple définie par des valeurs spécifiques associées au champ de configuration de portée, les interfaces réseau des différents constituants du réseau 14 et notamment des équipements réseau 22, 24 étant alors programmées pour reconnaître une telle adresse et pour rediriger ou non les messages en conséquence.

Un autre champ d'un message émis sur le réseau peut également comprendre un nombre maximum de routage, c'est à dire le nombre maximal de routeurs que traverse le message entre un élément communicant émetteur d'un message et son ou ses destinataires. A chaque passage de routeur, la valeur de ce champ est décrémentée.

Le choix du protocole IPv6 est préféré pour le réseau 14, car ce protocole implémente, de façon native, un tel mode multicast. Toutefois, le réseau 14 pourrait également utiliser un protocole KNX, ou de façon générale, tout protocole supportant un adressage de groupe et une portée de diffusion de message.

Par exemple, un même point de commande 8 peut être utilisé pour commander les équipements d'une seule zone ou plusieurs zones du bâtiment 2, telle qu'une pièce de ce bâtiment 2, ou d'un étage entier du bâtiment 2, simplement en modifiant son positionnement dans le réseau ou en modifiant la portée du message envoyé par ce point de commande 8 sur le réseau 14 ceci sans être contraint par les limitations des bus de données classiquement utilisées. Le réseau peut également être utilisé sans que les appairages entre les équipements domotiques n'aient été réalisés.

Par exemple, lorsque le point de commande 8 du sous-réseau SSN1 fonctionne en mode multicast, alors, selon la portée du message choisie, il envoie un message soit à tous les équipements domotiques de son groupe, c'est-à-dire du sous-réseau SSN1, soit à tous les équipements domotiques du sous-réseau SN, soit à tous les équipements domotiques du réseau 14 ainsi qu'à l'unité centrale 12.

Alternativement pour une même valeur de portée locale par exemple, si le point de commande 8 est positionné dans un premier sous-réseau SN1, le message émis par le point de commande 8 sera reçu par les équipements du premier sous-réseau SN1. S'il est positionné dans un deuxième sous-réseau SN2, le message sera reçu par les équipements du deuxième sous-réseau SN2.

Pour une même valeur de portée de sous-réseau par exemple, si le point de commande 8 est positionné dans un premier sous-réseau SN1, le message émis par le point de commande 8 sera reçu par les équipements du premier sous-réseau SN1 et par les équipements des éventuels sous-réseaux de rang inférieur au sous-réseau SN1. S'il est positionné dans un deuxième sous-réseau SN2, le message sera reçu par les équipements du deuxième sous-réseau SN2 et par les équipements du ou des sous-réseaux de rang inférieur au sous-réseau SN2. S'il est positionné dans le sous-réseau SN, le message sera reçu par les équipements du premier sous-réseau SN1, les équipements du sous-réseau SN2 et par les équipements du ou des sous-réseaux de rang inférieur aux sous-réseaux SN1 et SN2.

Comme les sous réseaux sont associés à des zones du bâtiment 2, en contrôlant la diffusion d'un message au sein des sous réseaux, grâce à la portée des messages, on contrôle facilement la diffusion des messages géographiquement dans le bâtiment à destination des différents équipements domotiques du système 4 et on peut facilement modifier le fonctionnement du réseau sans en changer l'architecture physique.

En d'autres termes, la fonctionnalité du système 4 est en partie définie par l'architecture physique du réseau 14, l'architecture logique pouvant être modifiée de façon simplifiée postérieurement à l'installation, par exemple pour ajouter de nouveaux sous-réseaux et/ou pour modifier des sous-réseaux existants.

Ainsi, grâce à l'invention, le comportement d'un équipement peut être défini par la façon dont le réseau de communication est câblé lors de son installation et peut être modifié même après que le câblage ait été installé, sans modifier le rattachement câblé de l'équipement dans le réseau.

Par exemple, si de nouveaux équipements domotiques sont installés dans une pièce du bâtiment 2 postérieurement à l'installation du système 4, par exemple des volets occultants pour protéger des ouvertures du bâtiment 2, alors ces nouveaux équipements peuvent être connectés dans un sous-réseau existant ou être connectés à un nouveau routeur 24 pour former un nouveau sous-réseau. Ce nouveau sous-réseau est lui-même connecté au réseau principal B ou à un sous-réseau existant SN, SSN, SSSN et fait donc partie du réseau 14.

La communication en mode multicast décrite ci-dessus n'est pas limitée aux points de commande 8 et s'applique également aux autres équipements domotiques du système 4 connectés au réseau 14, en particulier aux capteurs. Par exemple, un capteur 10 peut envoyer les données mesurées à différents équipements domotiques du système 4, dans le cas où leur fonctionnement a été programmé comme dépendant de grandeurs mesurées par le capteur 10. Cela peut par exemple, de façon non exhaustive, concerner le cas de volets occultants dont le déclenchement dépend de l'ensoleillement du bâtiment 2, ou d'un climatiseur dont le déclenchement dépend de la température d'une pièce du bâtiment 2.

Le réseau 14 permet également de lever la limitation que présentent les systèmes connus en nombre maximum d'équipements pouvant être connectés. En effet, les équipements domotiques sont connectés au sein des sous-réseaux dont le nombre peut être multiplié selon les besoins, en ajoutant des passerelles 22 et/ou des routeurs 24. Même lorsqu'un bus de données tel qu'un bus multipoint de type RS485 est utilisé pour former une liaison 26 connectant les équipements domotiques à l'intérieur d'un des sous-réseaux, cela n'est pas aussi contraignant que dans les systèmes connus, puisqu'ici seule une petite partie des équipements domotiques du système 4 est connectée sur ce bus de données 26.

Les équipements domotiques du système 4 sont avantageusement préconfigurés avec une portée définie par défaut lors de leur sortie d'usine préalablement à leur installation lors de la pose du système 4. Cela permet à l'installateur de ne pas avoir, dans un premier temps, à se préoccuper d'autre chose que de la pose des câbles et la pose des équipements domotiques selon la topologie associée à l'architecture du bâtiment. De plus, lors de l'installation du système 4, grâce à cette préconfiguration, l'installateur a la possibilité de tester le comportement par défaut des sous-réseaux avant de finaliser l'installation, notamment en utilisant des points de commande locaux installés temporairement dans le réseau, ce qui réduit le temps d'installation.

Par exemple, un procédé de configuration d'un tel système domotique comprend les étapes suivantes :
D'abord, un point de commande 8 ayant une portée de diffusion prédéfinie de sous-réseau est installé dans un premier sous-réseau du réseau de communication 14, par exemple le sous-réseau SSN1. Cette installation est ici temporaire.

Ensuite, une première commande est émise en mode multicast à partir de ce point de commande 8. Cette première commande comporte par exemple un message de test destiné à être diffusé sur une partie du réseau de communication 14. Par exemple, le point de commande 8 est préconfiguré avec une portée de diffusion prédéfinie par défaut comme étant une portée locale. Ainsi, la commande est censée n'être envoyée qu'aux seuls équipements du premier sous-réseau SSN1.

On vérifie ensuite que la première commande s'applique aux seuls équipements domotiques du premier sous-réseau SSN1. Cette vérification est par exemple réalisée automatiquement, directement ou indirectement, par exemple en relevant des variables d'état des équipements domotiques représentatives de l'état des équipements domotiques du premier sous-réseau SSN1.

A ce stade, si la première commande s'applique à d'autres équipements domotiques que ceux du premier sous-réseau SSN1, alors cela indique une configuration erronée du système 4. Il en va de même si la première commande ne s'applique pas à tous les équipements domotiques du premier sous-réseau SSN1.

Sinon, si la première commande s'applique correctement, alors on installe ensuite le point de commande 8 dans un deuxième sous-réseau SN de rang n, c'est-à-dire ayant un rang supérieur au rang du premier sous-réseau SSN1. Par exemple, le point de commande 8 est désinstallé du premier sous-réseau pour être installé, ici temporairement, dans ce deuxième sous-réseau SN.

On émet ensuite une deuxième commande en mode multicast à partir du point de commande 8 désormais installé dans ce deuxième sous-réseau SN. Là encore, le point de commande 8 est préconfiguré avec une portée de diffusion réglée par défaut comme étant une portée locale.

Puis on vérifie que la deuxième commande s'applique aux éléments du deuxième sous-réseau SN de rang n ainsi qu'aux éléments des sous-réseaux SSN1, SSN2, SSSN de rang inférieur au rang n. Cela peut être fait de façon analogue à la précédente vérification.

A ce stade, si la deuxième commande s'applique à d'autres éléments que ceux des réseaux et sous-réseaux précités ou, au contraire, ne s'applique pas à tous ces éléments, alors cela indique une mauvaise configuration du système 4. Sinon, on considère que le fonctionnement est normal. L'installation du système 4 peut se poursuivre.

## Revendications

1. Système domotique (4) pour un bâtiment (2), ce bâtiment étant partagé en plusieurs zones (Z1, Z2, Z3, Z4), le système domotique (4) comportant:
- des équipements domotiques (6, 8, 10), répartis au sein de zones (Z1, Z2, Z3, Z4) du bâtiment, et
- un réseau de communication (14), auquel sont connectés les équipements domotiques (6, 8, 10), ce réseau de communication (14) autorisant une communication des équipements domotiques (6, 8, 10) entre eux selon un protocole de communication prédéfini ; le réseau de communication (14) étant un réseau hiérarchique câblé comportant :
- un premier réseau (B, SN1, SN2) de rang n,
- une pluralité de sous-réseaux (SN1, SN2, SSN1, SSN2) de rang hiérarchique inférieur n-1, connectés au premier réseau, chaque sous-réseau étant associé à une zone (Z1, Z2, Z3, Z4) du bâtiment (2), chaque sous-réseau (SN1, SN2, SSN1, SSN2) contenant au moins un des équipements domotiques (6, 8, 10) ;
chaque sous-réseau de rang hiérarchique inférieur n-1 étant raccordé au premier réseau de rang n par un équipement réseau (22, 24), tel qu'un routeur;
le système domotique étant **caractérisé en ce que** chacun parmi plusieurs des équipements domotiques (6, 8, 10) du réseau de communication (14) est configuré pour fournir des informations aux autres équipements domotiques (6, 8, 10) avec une portée de diffusion réglable par sélection entre:
(a) à destination du seul sous-réseau de rang hiérarchique inférieur n-1 dans lequel il se trouve,
(b) à destination de plusieurs des sous-réseaux (SN1, SN2, SSN1, SSN2) de rang hiérarchique inférieur n-1, et
(c) à destination de l'ensemble du réseau de rang n et des sous-réseaux de rang n-1.

2. Système domotique (4) selon la revendication précédente, dans lequel l'équipement réseau (22, 24) est configuré pour inhiber la propagation des informations vers les équipements domotiques de sous-réseaux de même rang hiérarchique si la portée de diffusion réglable est une portée locale.

3. Système domotique (4) selon l'une quelconque des revendications précédentes, dans lequel l'équipement réseau (22, 24) est configuré pour autoriser la propagation des informations vers les équipements domotiques de sous-réseaux de rang hiérarchique inférieurs si la portée réglable est une portée locale.

4. Système domotique (4) selon l'une quelconque des revendications précédentes, dans lequel le protocole de communication est le protocole IP, de préférence le protocole IPv6.

5. Système domotique (4) selon l'une quelconque des revendications précédentes, dans lequel le réseau de rang hiérarchique n est un réseau principal comprenant un bus de données commun (20), et dans lequel, parmi les sous-réseaux (SN1, SN2), au moins un premier de ces sous-réseaux (SN) est connecté à au réseau principal par l'intermédiaire d'un équipement réseau ayant la forme d'une passerelle (22) de connexion entre le bus de données commun (20) et le premier sous-réseau câblé, les média physiques du réseau principal et du premier sous-réseau étant différents.

6. Système domotique (4) selon la revendication précédente, dans lequel le bus de données commun (20) est une liaison Ethernet.

7. Système domotique (4) selon l'une quelconque des revendications précédentes, dans lequel le réseau (SN1, SN2) de rang hiérarchique n et les sous-réseaux (SSN1, SSN2) de rang hiérarchique inférieur n-1 comprennent des médias physiques identiques, chacun des sous-réseaux (SSN1, SSN2) étant connecté au réseau (SN1, SN2) de rang hiérarchique n par l'intermédiaire d'un équipement réseau tel qu'un routeur (24).

8. Système domotique (4) selon la revendication précédente, dans lequel les équipements domotiques (6, 8, 10) d'un même sous-réseau sont connectés entre eux au moyen d'une liaison physique (26) telle qu'un bus de données multipoints, de préférence une liaison filaire de type RS485.

9. Système domotique (4) selon l'une quelconque des revendications précédentes, dans lequel les équipements réseau (22, 24) et les équipements domotiques (6, 8, 10) sont chacun équipés d'une interface réseau (40) qui les connecte au réseau de communication (14), cette interface réseau (40) étant programmée pour implémenter une pile réseau conforme au protocole de communication prédéfini.

10. Système domotique (4) selon l'une quelconque des revendications précédentes, dans lequel un équipement domotique (6, 8, 10) est un appareil domotique commandable (6) pourvu d'un actionneur commandable, ou un point de commande (8), ou un capteur (10).

11. Bâtiment (2), par exemple à usage domestique, commercial ou industriel, comprenant plusieurs zones (Z1, Z2, Z3, Z4) et équipé d'un système domotique (4) comprenant des équipements domotiques (6, 8, 10) répartis au sein de zones (Z1, Z2, Z3, Z4) du bâtiment, **caractérisé en ce que** le système domotique (4) est conforme à l'une quelconque des revendications précédentes.

12. Procédé de configuration d'un système domotique (4) selon l'une quelconque des revendications 1 à 10, comprenant les étapes suivantes :
- installation d'un point de commande (8) ayant une portée de diffusion prédéfinie de sous-réseau dans un premier sous-réseau (SSN1, SSN2) d'un réseau de communication (14) du système domotique (4) ;
- émission, vers le réseau de communication (14), d'une première commande en mode multicast à partir de ce point de commande (8) ;
- vérification que la première commande s'applique aux seuls équipements domotiques du premier sous-réseau (SSN1, SSN2), la configuration du système domotique (4) étant considérée comme erronée dans le cas contraire ;
- installation du point de commande (8) dans un deuxième sous-réseau (SN) de rang n, ayant un rang supérieur au rang du premier sous-réseau (SSN1, SSN2) ;
- émission, vers le réseau de communication (14), d'une deuxième commande en mode multicast à partir du point de commande (8) ;
- vérification que la deuxième commande s'applique aux éléments du deuxième sous-réseau (SN) de rang n ainsi qu'aux éléments des sous-réseaux (SSN1, SSN2, SSN1, SSN2, SSSN) de rang inférieur au rang n, la configuration du système domotique (4) étant considérée comme erronée dans le cas contraire.

## Patentansprüche

1. Gebäudeautomationssystem (4) für ein Gebäude (2), wobei dieses Gebäude in mehrere Zonen (Z1, Z2, Z3, Z4) aufgeteilt ist, wobei das Gebäudeautomationssystem (4) umfasst:
- Gebäudeautomationseinrichtungen (6, 8, 10), die innerhalb von Zonen (Z1, Z2, Z3, Z4) des Gebäudes verteilt sind, und
- ein Kommunikationsnetzwerk (14), mit dem die Gebäudeautomationseinrichtungen (6, 8, 10) verbunden sind, wobei dieses Kommunikationsnetzwerk (14) eine Kommunikation der Gebäudeautomationseinrichtungen (6, 8, 10) miteinander gemäß einem vordefinierten Kommunikationsprotokoll gestattet;
wobei das Kommunikationsnetzwerk (14) ein verdrahtetes hierarchisches Netzwerk ist, das umfasst:
- ein erstes Netzwerk (B, SN1, SN2) mit Rang n,
- eine Vielzahl von Unternetzwerken (SN1, SN2, SSN1, SSN2) mit niedrigerem hierarchischem Rang n-1, die mit dem ersten Netzwerk verbunden sind, wobei jedes Unternetzwerk mit einer Zone (Z1, Z2, Z3, Z4) des Gebäudes (2) assoziiert ist, wobei jedes Unternetzwerk (SN1, SN2, SSN1, SSN2) mindestens eine der Gebäudeautomationseinrichtungen (6, 8, 10) enthält;
wobei jedes Unternetzwerk mit niedrigerem hierarchischem Rang n-1 an das erste Netzwerk mit Rang n von einer Netzwerkausstattung (22, 24), wie einem Router, angeschlossen ist;
wobei das Gebäudeautomationssystem **dadurch gekennzeichnet ist, dass** jede der mehreren Gebäudeautomationseinrichtungen (6, 8, 10) des Kommunikationsnetzwerks (14) dazu konfiguriert ist, Informationen an die anderen Gebäudeautomationseinrichtungen (6, 8, 10) mit einer Verteilungsreichweite zu liefern, die einstellbar ist durch Auswahl von:
(a) an das einzige Unternetzwerk mit niedrigerem hierarchischem Rang n-1, in dem sie sich befindet,
(b) an mehrere der Unternetzwerke (SN1, SN2, SSN1, SSN2) mit niedrigerem hierarchischem Rang n-1, und/oder
(c) an das gesamte Netzwerk mit Rang n und den Unternetzwerken mit Rang n-1.

2. Gebäudeautomationssystem (4) nach dem vorstehenden Anspruch, wobei die Netzwerkeinrichtung (22, 24) dazu konfiguriert ist, die Weitergabe der Informationen an die Gebäudeautomationseinrichtungen von Unternetzwerken mit demselben hierarchischen Rang zu inhibieren, falls die einstellbare Verteilungsreichweite eine lokale Reichweite ist.

3. Gebäudeautomationssystem (4) nach einem der vorstehenden Ansprüche, wobei die Netzwerkeinrichtung (22, 24) dazu konfiguriert ist, die Weitergabe der Informationen an die Gebäudeautomationseinrichtungen von Unternetzwerken mit niedrigerem hierarchischem Rang zu gestatten, falls die einstellbare Verteilungsreichweite eine lokale Reichweite ist.

4. Gebäudeautomationssystem (4) nach einem der vorstehenden Ansprüche, wobei das Kommunikationsprotokoll das IP-Protokoll, vorzugsweise das IPv6-Protokoll ist.

5. Gebäudeautomationssystem (4) nach einem der vorstehenden Ansprüche, wobei das Netzwerk mit hierarchischem Rang n ein Hauptnetzwerk ist, das einen gemeinsamen Datenbus (20) umfasst, und wobei unter den Unternetzwerken (SN1, SN2) mindestens ein erstes dieser Unternetzwerke (SN) mit dem Hauptnetzwerk über eine Netzwerkeinrichtung verbunden ist, die die Form eines Gateway (22) zur Verbindung zwischen dem gemeinsamen Datenbus (20) und dem ersten verkabelten Unternetzwerk aufweist, wobei die physischen Medien des Hauptnetzwerks und des ersten Unternetzwerks unterschiedlich sind.

6. Gebäudeautomationssystem (4) nach dem vorstehenden Anspruch, wobei der gemeinsame Datenbus (20) eine Ethernetverbindung ist.

7. Gebäudeautomationssystem (4) nach einem der vorstehenden Ansprüche, wobei das Netzwerk (SN1, SN2) mit hierarchischem Rang n und die Unternetzwerke (SSN1, SSN2) mit niedrigerem hierarchischem Rang n-1 identische physische Medien umfassen, wobei jedes der Unternetzwerke (SSN1, SSN2) mit dem Netzwerk (SN1, SN2) mit hierarchischem Rang n über eine Netzwerkeinrichtung, wie einen Router (24), verbunden ist.

8. Gebäudeautomationssystem (4) nach dem vorstehenden Anspruch, wobei die Gebäudeautomationseinrichtungen (6, 8, 10) desselben Unternetzwerks miteinander mittels einer physischen Verbindung (26), wie einem Multi-Drop-Datenbus, vorzugsweise einer verdrahteten Verbindung vom Typ RS485, verbunden sind.

9. Gebäudeautomationssystem (4) nach einem der vorstehenden Ansprüche, wobei die Netzwerkeinrichtungen (22, 24) und die Gebäudeautomationseinrichtungen (6, 8, 10) jeweils mit einer Netzwerkschnittstelle (40) ausgestattet sind, die sie mit dem Kommunikationsnetzwerk (14) verbindet, wobei diese Netzwerkschnittstelle (40) dazu programmiert ist, einen Netzwerkstapel gemäß dem vordefinierten Kommunikationsprotokoll umzusetzen.

10. Gebäudeautomationssystem (4) nach einem der vorstehenden Ansprüche, wobei eine Gebäudeautomationseinrichtung (6, 8, 10) ein steuerbares Gebäudeautomationsgerät (6) ist, das mit einem steuerbaren Aktuator oder einem Kontrollpunkt (8) oder einem Sensor (10) versehen ist.

11. Gebäude (2), zum Beispiel für Heim-, Handels- oder Industriegebrauch, das mehrere Zonen (Z1, Z2, Z3, Z4) umfasst und mit einem Gebäudeautomationssystem (4) ausgestattet ist, das Gebäudeautomationseinrichtungen (6, 8, 10) umfasst, die innerhalb von Zonen (Z1, Z2, Z3, Z4) des Gebäudes verteilt sind, **dadurch gekennzeichnet, dass** das Gebäudeautomationssystem (4) einem der vorstehenden Ansprüche entspricht.

12. Verfahren zur Konfiguration eines Gebäudeautomationssystems (4) nach einem der Ansprüche 1 bis 10, das die folgenden Schritte umfasst:
- Installation eines Kontrollpunkts (8), der eine vordefinierte Unternetzwerk-Verteilungsreichweite aufweist, in einem ersten Unternetzwerk (SSN1, SSN2) eines Kommunikationsnetzwerks (14) des Gebäudeautomationssystems (4);
- Ausgabe eines ersten Befehls im Multicast-Modus ausgehend von diesem Kontrollpunkt (8) an das Kommunikationsnetzwerk (14);
- Überprüfung, dass der erste Befehl nur für die Gebäudeautomationseinrichtungen des ersten Unternetzwerks (SSN1, SSN2) gilt, wobei die Konfiguration des Gebäudeautomationssystems (4) in dem gegenteiligen Fall als fehlerhaft betrachtet wird;
- Installation des Kontrollpunkts (8) in einem zweiten Unternetzwerk (SN) mit Rang n, das einen Rang höher ist als der Rang des ersten Unternetzwerks (SSN1, SSN2);
- Ausgabe eines zweiten Befehls im Multicast-Modus ausgehend von dem Kontrollpunkt (8) an das Kommunikationsnetzwerk (14);
- Überprüfung, dass der zweite Befehl für die Elemente des zweiten Unternetzwerks (SN) mit Rang n sowie für die Elemente der Unternetzwerke (SSN1, SSN2, SSN1, SSN2, SSSN) mit niedrigerem Rang als Rang n gelten, wobei die Konfiguration des Gebäudeautomationssystems (4) in dem gegenteiligen Fall als fehlerhaft betrachtet wird.

## Claims

1. A home automation system (4) for a building (2), this building being divided into several areas (Z1, Z2, Z3, Z4), the home automation system (4) comprising:
- home automation equipment items (6, 8, 10), distributed within areas (Z1, Z2, Z3, Z4) of the building, and
- a communication network (14), to which the home automation equipment items (6, 8, 10) are connected, this communication network (14) authorizing an intercommunication of the home automation equipment items (6, 8, 10) according to a predefined communication protocol;
the communication network (14) being a hardwired hierarchical network including:
- a first network (B, SN1, SN2) of rank n,
- a plurality of subnetworks (SN1, SN2, SSN1, SSN2) of lower hierarchical rank n-1, connected to the first network, each subnetwork being associated with an area (Z1, Z2, Z3, Z4) of the building (2), each subnetwork (SN1, SN2, SSN1, SSN2) containing at least one of the home automation equipment items (6, 8, 10);
each subnetwork of lower hierarchical rank n-1 being connected to the first network of rank n by a network equipment item (22, 24), such as a router, the home automation system being **characterized in that** each among several of the home automation equipment items (6, 8, 10) of the communication network (14) is configured to provide information to the other home automation equipment items (6, 8, 10) with a broadcast range adjustable by selection between:
(a) a broadcast range intended solely for the subnetwork of lower hierarchical rank n-1 in which it is located;
(b) a broadcast range intended for several of the subnetworks (SN1, SN2, SSN1, SSN2) of lower hierarchical rank n-1, and
(c) a broadcast range intended for the entirety of the network of rank n and subnetworks with rank n-1.

2. The home automation system (4) according to the preceding claim, wherein the network equipment item (22, 24) is configured to inhibit the propagation of information to the home automation equipment items of subnetworks of equal hierarchical rank if the adjustable broadcast range is a local range.

3. The home automation system (4) according to claim 2 or 3, wherein the network equipment item (22, 24) is configured to authorize the propagation of information to the home automation equipment items of subnetworks of lower hierarchical rank if the adjustable range is a local range.

4. The home automation system (4) according to any one of the preceding claims, wherein the communication protocol is the IP protocol, preferably the IPv6 protocol.

5. The home automation system (4) according to any one of the preceding claims, wherein the network of hierarchical rank n is a main network comprising a common data bus (20), and wherein among the subnetworks (SN1, SN2), at least a first of these subnetworks (SN) is connected to the main network by means of a network equipment item in the form of a connection gateway (22) between the common data bus (20) and the first hardwired subnetwork, the physical medium of the main network and the first subnetwork being different.

6. The home automation system (4) according to the preceding claim, wherein the common data bus (20) is an Ethernet link.

7. The home automation system (4) according to any one of the preceding claims, wherein the network (SN1, SN2) of hierarchical rank n and the subnetworks (SSN1, SSN2) of lower hierarchical rank n-1 comprise identical physical media, each of the subnetworks (SSN1, SSN2) being connected to the network (SN1, SN2) of hierarchical rank n by means of a network equipment item such as a router (24).

8. The home automation system (4) according to the preceding claim, wherein the home automation equipment items (6, 8, 10) of a same subnetwork are interconnected using a physical link (26) such as a multipoint data bus, preferably a wired link of type RS485.

9. The home automation system (4) according to any one of the preceding claims, wherein the network equipment items (22, 24) and the home automation equipment items (6, 8, 10) are each equipped with a network interface (40) that connects them to the communication network (14), this network interface (40) being programmed to implement a network stack according to the predefined communication protocol.

10. The home automation system (4) according to any one of the preceding claims, wherein a home automation equipment item (6, 8, 10) is a controllable home automation apparatus (6) provided with a controllable actuator, or a control point (8), or a sensor (10).

11. A building (2), for example for domestic, commercial or industrial use, comprising several areas (Z1, Z2, Z3, Z4) and equipped with a home automation system (4) comprising home automation equipment items (6, 8, 10) distributed within areas (Z1, Z2, Z3, Z4) of the building, **characterized in that** the home automation system (4) is according to any one of the preceding claims.

12. A method for configuration a home automation system (4) according to any one of claims 1 to 11, comprising the following steps:
- Installing a control point (8) having a predefined subnetwork broadcast range in a first subnetwork (SSN1, SSN2) of a communication network (14) of the home automation system (4);
- Sending, to the communication network (14), a first command in multicast mode from this control point (8);
- Verifying that the first command applies only to the home automation equipment items of the first subnetwork (SSN1, SSN2), the configuration of the home automation system being considered incorrect otherwise;
- Installing the control point (8) in a second subnetwork (SN) with rank n, having a rank higher than the rank of the first subnetwork (SSN1, SSN2);
- Sending, to the communication network (14), a second command in multicast mode from the control point (8);
- Verifying that the second command applies to the elements of the second subnetwork (SN) with rank n as well as the elements of the subnetworks (SSN1, SSN2, SSN1, SSN2, SSSN) of rank lower than rank n, the configuration of the home automation system (4) being considered incorrect otherwise.
